**Europäisches Patentamt**

**European Patent Office**

**Office européen des brevets**

(19)

(11) Veröffentlichungsnummer: **0 229 885 B1**

## EUROPÄISCHE PATENTSCHRIFT

(12)

(45) Veröffentlichungstag der Patentschrift: **27.02.91**

(51) Int. Cl.⁵: **F16B 21/00**, F16B 2/00, E05B 65/20

(21) Anmeldenummer: **86114335.2**

(22) Anmeldetag: **16.10.86**

(54) Verbindungsvorrichtung für einen Kraftfahrzeugtürgriff.

(30) Priorität: **18.12.85 DE 3544699**

(43) Veröffentlichungstag der Anmeldung:
**29.07.87 Patentblatt 87/31**

(45) Bekanntmachung des Hinweises auf die
Patenterteilung:
**27.02.91 Patentblatt 91/09**

(84) Benannte Vertragsstaaten:
**DE ES FR GB IT**

(56) Entgegenhaltungen:
CH-A- 341 761     DE-A- 3 202 433
DE-U- 8 525 508     FR-A- 2 389 745
FR-A- 2 450 377     FR-A- 2 505 418
US-A- 3 916 756

(73) Patentinhaber: **VALEO NEIMAN**
**12bis, rue Maurice Berteaux**
**F-78290 CROISSY-SUR-SEINE(FR)**

(72) Erfinder: **Friese, Dieter**
**Holthauser Strasse 86**
**D-5600 Wuppertal 21(DE)**
Erfinder: **Schreiner, Werner**
**Hans Sachs Weg 46**
**D-4018 Langenfeld(DE)**

(74) Vertreter: **Cohausz & Florack Patentanwälte**
**Postfach 14 01 61 Schumannstrasse 97**
**D-4000 Düsseldorf 1(DE)**

## Beschreibung

Die Erfindung betrifft eine Vorrichtung zum kraftschlüssigen Verbinden eines mit der Türhandhabe eines Kraftfahrzeug-Türgriffes verbundenen ersten Teiles, das an der Rückseite des Türgriffes vorsteht, mit einem zum Türschloß führenden zweiten Teil.

Es ist bekannt, die von einer Türhandhabe in das Türinnere reichende Stange des Gestänges zwischen Türgriff und Türschloß mit der zum Türschloß führenden Stange über eine Schraubverbindung zu befestigen oder aneinander anzuhaken und eine Schraubzwischenverbindung zwischen der hakenförmigen Befestigung und der Türhandhabe anzuordnen. Eine solche zwischen Türgriff und Türschloß im Übertragungsgestänge angeordnete Schraubverbindung war bisher erforderlich, um Fertigungstoleranzen aufnehmen zu können. Ein Nacheinstellen der Schraubverbindung bedeutet einen zusätzlichen Arbeitsgang, der von Hand durchgeführt werden muß.

Aus der FR-389745 und der DE-3202433 ist es an sich bekannt, bei einem Türschloß eines Kraftfahrzeuges Formgesperre vorzusehen. Die Zähne solcher Formgesperre lassen nur wenige definierte Stellungen zu.

Aufgabe der Erfindung ist es, eine Verbindungsvorrichtung zu schaffen, die eine leichte und schnelle Montage des Türgriffes zuläßt, wobei eine spielfreie Befestigung ohne nachträgliches manuelles Einstellen oder Einrichten erreicht wird.

Diese Aufgabe wird erfindungsgemäß dadurch gelöst, daß die Vorrichtung eine Steckverbindung bildet, mit einem insbesondere bolzen- oder stabförmigen Steckteil (7) und einem dieses umgebenden Aufnahmeteil (6), das ein Reib- oder Formgesperre für das Steckteil (7) bildet.

Diese Vorrichtung läßt es zu, daß bei bereits in das Kraftfahrzeug eingebautem Schloß der Türgriff eingeschoben und montiert werden kann bei geringstem Montageaufwand. Bei diesem Einschieben entsteht selbsttätig eine sichere Verbindung zwischen den Kraftübertragungsteilen von Türgriff und Schloß. Es entsteht eine spielfreie Befestigung, ohne nachträglich etwas ein- oder verstellen zu müssen. Besonders vorteilhaft ist es, daß die Verbindung es ermöglicht, daß ein Roboter den Türgriff einsetzt und hierbei die Verbindung schafft.

In einer ersten konstruktiv einfachen und sicheren Ausführungsform wird vorgeschlagen, daß das Aufnahmeteil ein keil- oder kegelförmiges Klemmteil aufweist, an dem während des Einsteckens das Steckteil entlanggleitet und das gegen die Einsteckrichtung federbelastet ist. Hierbei kann das Klemmteil ringförmig sein und außen an einer Schrägfläche anliegen.

Eine konstruktiv besonders einfache Vorrichtung wird dadurch geschaffen, daß das Aufnahmeteil eine zur Einsteckrichtung schräge Scheibe aufweist, in deren Öffnung das Steckteil schiebbar ist und die entgegen der Einsteckrichtung federbelastet ist. Eine weitere besonders einfache Alternative kann in der Weise gefertigt sein, daß das Aufnahmeteil eine konusförmige Ringscheibe aufweist, deren beide Seitenflächen zueinander parallel und konusförmig sind, wobei der Konusdurchmesser in Einsteckrichtung abnimmt und die mittige Öffnung der Ringscheibe einen etwas kleineren Durchmesser als der des Steckteils aufweist.

Zum Ausgleich der Bewegungsabläufe wird vorgeschlagen, daß das Aufnahmeteil gegenüber dem zum Schloß bzw. zum Türgriff führenden Übertragungsteil um mindestens eine Achse gelenkig gelagert ist. Zum Lösen der Steckverbindung kann das am Steckteil anliegende es haltende Bauteil des Aufnahmeteils vom Steckteil insbesondere durch ein Werkzeug von Hand wegbewegbar sein.

Um das Steckteil sicher und schnell einführen zu können, wird vorgeschlagen, daß an der Einführungsseite das Aufnahmeteil eine konusförmige bzw. trichterförmige Führungsfläche aufweist.

Ein Ausführungsbeispiel der Erfindung ist in den Zeichnungen dargestellt und wird im folgenden näher beschrieben. Es zeigen:

Fig. 1     einen waagerechten Schnitt durch eine Kraftfahrzeugtür im Bereich des Türgriffs;

Fig. 2     einen Schnitt nach A-A in Fig. 1 in doppelt so großem Maßstab.

Fig. 3     ein zweites Ausführungsbeispiel mit keilförmigem Klemmteil;

Fig. 4     einen Schnitt nach B-B in Fig. 3;

Fig. 5     eine Halbansicht sowie einen Halbschnitt eines vierten Ausführungsbeispiels mit verschwenkbarem scheibenförmigem Klemmteil;

Fig. 6     einen Längsschnitt durch das Ausführungsbeispiel;

Fig. 7     einen Schnitt nach C-C in Fig. 6;

Fig. 8     ein fünftes Ausführungsbeispiel mit scheibenförmigem Klemmteil;

Fig. 9     einen Schnitt nach D-D in Fig. 8;

Fig. 10    eine Ansicht auf ein achtes Ausführungsbeispiel bei abgenommener Feder;

Fig. 11    eine Seitenansicht des achten Ausführungsbeispiels.

Ein Kraftfahrzeugtürgriff 1 ist an dem Außenblech 2 einer Kraftfahrzeugtür befestigt, wobei außen eine Handhabe 3 befestigt ist, die durch Ziehen das nicht dargestellte Türschloß betätigt. Die Handhabe 3 ist über ein Gestänge mit dem Türschloß verbunden, wobei an der Handhabe 3 auf der Innenseite ein Übertragungsteil 4 befestigt ist, das über eine Verbindungsvorrichtung 5 an ein Übertragungsteil 6 angeschlossen ist, das zum Türschloß führt bzw. im Türschloß gelagert ist.

Am etwa waagerecht und parallel zur Türstirnseite angeordneten Übertragungsteil 4 ist ein Steckteil 7 angelenkt, das in ein Aufnahmeteil 8 eingesteckt ist. Für das bolzenförmige Steckteil 7 weist das buchsenförmige Aufnahmeteil 8 eine zentrale Öffnung 9 auf, deren Durchmesser nur wenig größer ist als die des Steckteils 7. An der dem Türgriff zugewandten Seite ist die Öffnung 9 konusförmig erweitert, so daß diese dort eine konusförmige Führungsfläche 10 zum erleichterten Einstecken bildet.

Auf der dem Türgriff abgewandten Seite weist die Öffnung 9 einen konusförmig sich erweiternden Bereich 11 auf, dessen Durchmesser mit wachsendem Abstand vom Türgriff größer wird. In diesem Bereich 11 liegt ein kegelförmiges Klemmteil 12 ein, dessen konusförmige Außenfläche an der konusförmigen Innenfläche der Öffnung 9 anliegt. Das Klemmteil 12 weist eine zentrale Bohrung auf, deren Durchmesser gleich dem des Steckteils 7 ist und die das Steckteil 7 aufnimmt. Das Klemmteil 12 ist durch eine Feder 13 zum Türgriff hin belastet, wobei das Klemmteil 12 innerhalb des Bereichs 11 axial gegen den Druck der Feder beweglich ist.

Wird das Steckteil 7 in das Aufnahmeteil 8 eingeführt, so gelangt es ohne größeren Widerstand leicht in das Klemmteil 12 hinein. Danach kann das Steckteil 7 nicht gegen die Einsteckrichtung B zurückgezogen werden, da dann das Klemmteil 12 durch das Steckteil 7 in den konusförmigen Bereich 11 tiefer hineingezogen wird, so daß das Klemmteil 12 im Bereich 11 radialen Kräften ausgesetzt ist, die Klemmteil 12 und Steckteil 7 gegenüber dem Aufnahmeteil 8 verklemmen. Erst durch ein manuelles Bewegen des Klemmteils 12 durch ein Werkzeug in Einsteckrichtung B wird das Steckteil 7 frei.

Das Aufnahmeteil 8 ist durch zwei koaxiale Stifte 14 in dem in diesem Bereich U-förmigen, außen anliegenden Übertragungsteil 6 beschränkt drehbar gelagert.

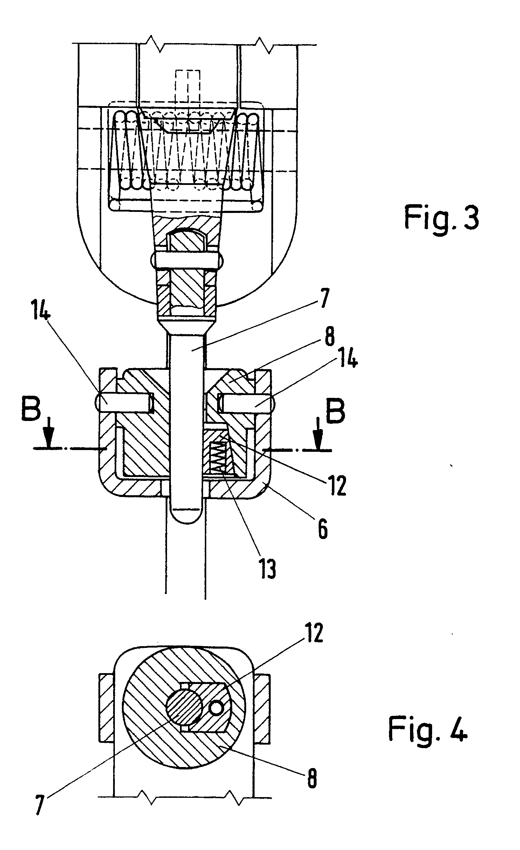

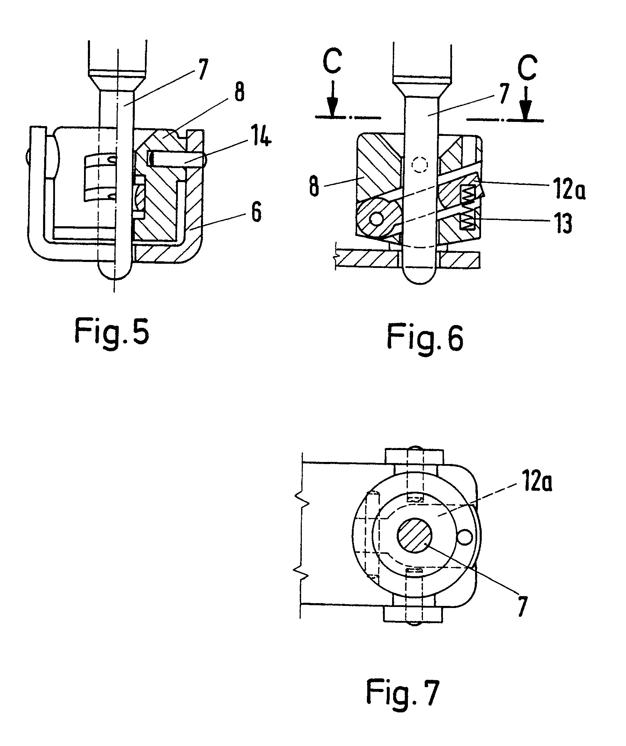

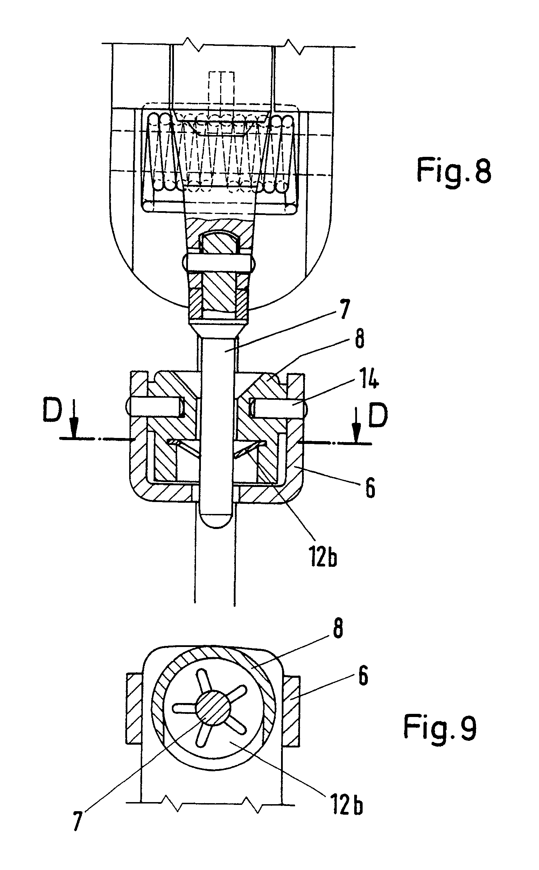

Statt diesem in den Zeichnungen dargestellten Reibgesperre mit konusförmigem Klemmteil kann auch ein keilförmiges, durch eine Feder 13 beaufschlagtes Klemmteil 12 angeordnet sein (Fig. 3, 4). Ferner kann das Aufnahmeteil 8 eine schräge, verschwenkbare Scheibe 12a besitzen, in deren Öffnung das Steckteil 7 einschiebbar ist (Fig. 6, 7). Die Scheibe 12a ist entgegen der Einsteckrichtung federbelastet (Feder 13), wobei aufgrund der Schrägstellung der Scheibe ein Klemmen des Steckteils 7 erfolgt. Auch kann das Aufnahmeteil 8 eine konusförmige Ringscheibe 12b besitzen, deren beide Seitenflächen zueinander parallel und konusförmig sind und wobei der Konusdurchmesser in Einsteckrichtung abnimmt (Fig. 8, 9). Die mittige, radiale Schlitze aufweisende Öffnung dieser Ringscheibe 12b weist hierbei einen Durchmesser auf, der etwas kleiner ist als der des Steckteils 7, so daß nach Einführen des Steckteils in diese Scheibe ein Zurückziehen des Steckteils ein Verformen der Ringscheibe erzeugt, hierdurch der Durchmesser der Öffnung der Ringscheibe kleiner wird und damit ein Festklemmen erfolgt (Benzing-Scheibe).

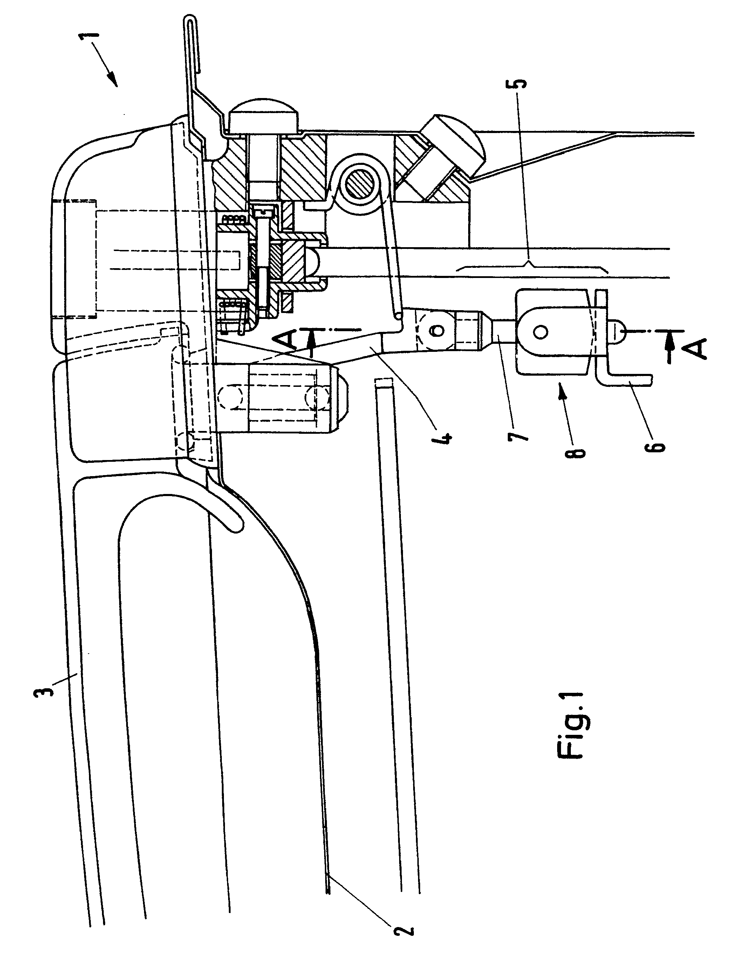

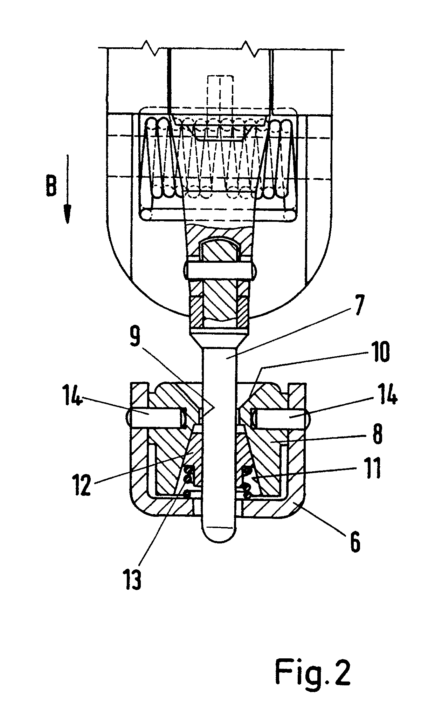

Statt der bisher dargestellten Reibgesperre kann auch ein Formgesperre die Verbindung zwischen Türgriff und Türschloß schaffen. Hierbei können Steckteil 7 und/oder Aufnahmeteil 8 Vorsprünge oder Zähne aufweisen, die in einer entsprechend geformten Ausnehmung des anderen Teils einrasten. Die Ausführungsbeispiele nach den Figuren 1 bis 7 können auch als Formgesperre ausgeführt sein.

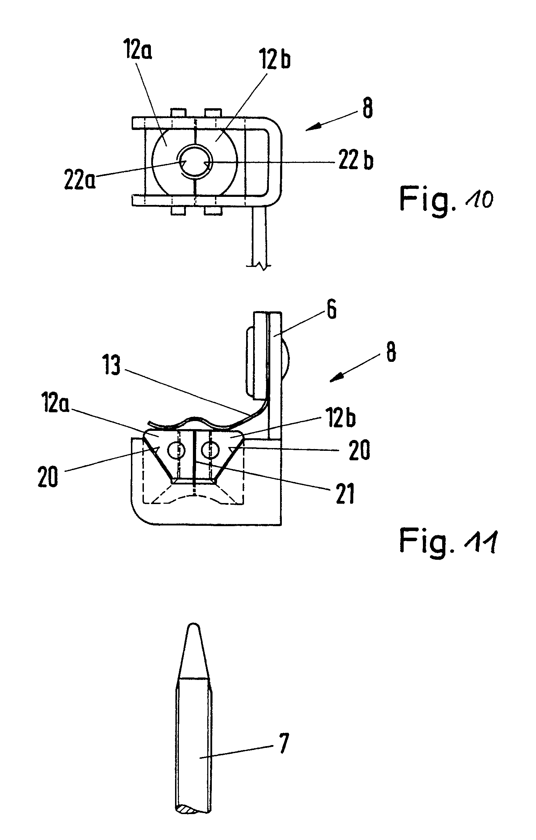

Beim Ausführungsbeispiel nach Fig. 10 und 11 weist das Aufnahmeteil 8 zwei halbkonusförmige Bauteile 12a, 12b auf, die in Einsteckrichtung gegen die Kraft der Feder 13 beweglich sind und in einer konusförmigen Öffnung 20 einliegen. Die Anlageflächen 21, mit denen die Bauteile aneinanderliegen, bilden axiale Rinnen 22a, 22b, die die Einführungsöffnung 22 für das Steckteil 7 formen.

## Ansprüche

1. Vorrichtung zum kraftschlüssigen Verbinden eines mit der Türhandhabe eines Kraftfahrzeug-Türgriffes verbundenen ersten Teiles, das an der Rückseite des Türgriffes vorsteht, mit einem zum Türschloß führenden zweiten Teil, **dadurch gekennzeichnet,** daß die Vorrichtung eine Steckverbindung bildet, mit einem insbesondere bolzen- oder stabförmigen Steckteil (7) und einem dieses umgebenden Aufnahmeteil (8), das ein Reibgesperre für das Steckteil (7) bildet.

2. Vorrichtung nach Anspruch 1, **dadurch gekennzeichnet,** daß das Aufnahmeteil (8) ein keil- oder kegelförmiges Bauteil, insbesondere Klemmteil (12) aufweist, an dem während des Einsteckens das Steckteil (7) entlanggleitet und das gegen die Einsteckrichtung (B) federbelastet ist.

3. Vorrichtung nach Anspruch 2, **dadurch gekennzeichnet,** daß das Klemmteil (12) ringförmig ist und außen an einer Schrägfläche anliegt.

4. Vorrichtung nach Anspruch 1, **dadurch ge-**

kennzeichnet, daß das Aufnahmeteil (8) eine zur Einsteckrichtung schräge Scheibe (12a) aufweist, in deren Öffnung das Steckteil (7) schiebbar ist und die entgegen der Einsteckrichtung federbelastet ist.

5. Vorrichtung nach Anspruch 1, **dadurch gekennzeichnet**, daß das Aufnahmeteil eine konusförmige Ringscheibe (12b) aufweist, deren beide Seitenflächen zueinander parallel und konusförmig sind, wobei der Konusdurchmesser in Einsteckrichtung abnimmt und die mittige Öffnung der Ringscheibe einen Durchmesser gleich dem des Steckteils (7) aufweist.

6. Vorrichtung nach einem der vorherigen Ansprüche, **dadurch gekennzeichnet**, daß das Aufnahmeteil (8) gegenüber dem zum Schloß bzw. zum Türgriff führenden Übertragungsteil (6) um mindestens eine Achse (14) gelenkig gelagert ist.

7. Vorrichtung nach einem der vorherigen Ansprüche, **dadurch gekennzeichnet**, daß zum Lösen der Steckverbindung das am Steckteil (7) anliegende, es haltende Bauteil (12) des Aufnahmeteils (8) insbesondere durch ein Werkzeug von Hand bewegbar ist.

8. Vorrichtung nach einem der vorherigen Ansprüche, **dadurch gekennzeichnet**, daß an der Einführungsseite das Aufnahmeteil (8) eine konusförmige bzw. trichterförmige Führungsfläche (10) aufweist.

9. Vorrichtung nach Anspruch 1 oder 2, **dadurch gekennzeichnet**, daß das Aufnahmeteil (8) zwei Bauteile (12a, 12b) aufweist, die das Reibgesperre bilden und gegen die Einsteckrichtung federbelastet sind.

10. Vorrichtung nach Anspruch 9, **dadurch gekennzeichnet**, daß die Bauteile (12a, 12b) jeweils um eine zur Einsteckrichtung quer angeordnete Achse (14a, 14b) drehbar gelagert sind.

11. Vorrichtung nach Anspruch 10, **dadurch gekennzeichnet**, daß die Bauteile (12a, 12b) durch eine Drehfeder (13a, 13b) belastet sind.

## Claims

1. A device for non-positive connection of a first part, connected to the door hand lever of a motor vehicle door handle, which projects from the rear side of the door handle to a second part connected to the door lock, characterized in that the device forms a push-in connection comprising, in particular, a bolt or rod shaped push-in element (7) and a receiving element (8) which surrounds the latter and forms a lock holding the push-in element (7) by friction.

2. A device according to Claim 1, characterized in that the receiving element (8) comprises a wedge or cone shaped component, in particular a clamping element (12), along which the push-in element (7) slides when being inserted and which is spring-loaded against the direction of insertion (B).

3. A device according to Claim 2, characterized in that the clamping element (12) is ring-shaped and bears on the outside against an inclined surface.

4. A device according to Claim 1, characterized in that the receiving element (8) comprises a disc (12a), at an angle to the direction of insertion, into the hole in which the push-in element (7) can be pushed and which is spring-loaded against the direction of insertion.

5. A device according to Claim 1, characterized in that the receiving element comprises a cone-shaped annular disc (12b) both side surfaces of which are parallel to one another and are cone-shaped wherein the diameter of the cone decreases in the direction of insertion and the central opening of the annular disc has a diameter equal to that of the push-in element (7).

6. A device according to any one of the preceding Claims, characterized in that the receiving element (8) is fastened so that it can pivot about at least one axis (14) to the transmission element (6) leading to the lock or to the door handle.

7. A device according to any one of the preceding Claims, characterized in that in order to unfasten the push-in connection the component (12) of the receiving element (8) which bears against and holds the push-in element (7) can be moved by hand, in particular by means of a tool.

8. A device according to any one of the preceding Claims, characterized in that the receiving element (8) comprises a cone-shaped or funnel-shaped guiding surface (10) on the insertion side.

9. A device according to Claim 1 or 2, characterized in that the receiving element (8) comprises two constructional components (12a, 12b) which form the friction locking device and are spring-loaded against the direction of insertion.

10. A device according to Claim 9, characterized in that the constructional components (12a, 12b) are each rotatably fastened about a shaft (14a, 14b) arranged at right angles to the direction of insertion.

11. A device according to Claim 10, characterized in that the constructional components (12a, 12b) are loaded by a torsion spring (13a, 13b).

**Revendications**

1. Dispositif pour la liaison par adhérence d'une première pièce liée à la manette d'une poignée de porte d'un véhicule automobile, faisant saillie à la partie postérieure de la poignée de porte, avec une deuxième pièce conduisant à la serrure de la porte, caractérisé en ce que le dispositif forme une liaison par insertion, comportant une pièce d'insertion (7) particulièrement en forme de cheville ou de tige, et une pièce réceptrice (8) l'entourant, qui forme un cliquet de friction pour la pièce d'insertion (7).

2. Dispositif selon la revendication 1, caractérisé en ce que la pièce réceptrice (8) présente un élément de forme conique ou sphérique, particulièrement pièce de serrage (12) contre et le long de laquelle la pièce d'insertion (7) glisse lors de l'insertion et qui est sous l'effet d'un ressort dans le sens opposé à celui de l'insertion (B).

3. Dispositif selon la revendication 2, caractérisé en ce que la pièce de serrage (12) est de forme annulaire et qu'elle porte à l'extérieur sur une surface inclinée.

4. Dispositif selon la revendication 1, caractérisé en ce que la pièce réceptrice (8) présente un disque (12a) en diagonale par rapport au sens de l'insertion, dans l'orifice duquel la pièce d'insertion (7) peut glisser, et qui est sous l'effet d'un ressort dans le sens opposé à celui de l'insertion.

5. Dispositif selon la revendication 1, caractérisé en ce que la pièce réceptrice présente une bague (12b) de forme conique, dont les deux faces latérales sont parallèles entre elles et en forme de conique, le diamètre du cone diminuant dans le sens de l'insertion et l'orifice central de la bague présentant un diamètre égal à celui de la pièce d'insertion (7).

6. Dispositif selon l'une des revendications précédentes, caractérisé en ce que la pièce réceptrice (8) est montée articulée autour d'au moins un axe (14) par rapport à la pièce de transmission (6) menant à la serrure ou à la poignée de la porte.

7. Dispositif selon l'une des revendications précédentes, caractérisé en ce que, pour défaire la liaison vissée, l'élément (12) de la pièce réceptrice (8), contigu à la pièce d'insertion (7) et la maintenant, peut être mobile à la main, particulièrement par un outil.

8. Dispositif selon l'une des revendications précédentes, caractérisé en ce que la pièce réceptrice (8) présente, sur le côté de l'insertion, une face de guidage (10) en forme de cone ou de trémie.

9. Dispositif selon la revendication 1 ou la revendication 2, caractérisé en ce que la pièce réceptrice (8) présente deux éléments (12a,12b) qui forment l'encliquetage à friction et sont sous l'effet d'un ressort dans le sens opposé à celui de l'insertion.

10. Dispositif selon la revendication 9, caractérisé en ce que les éléments (12a,12b) sont chacun montés pivotants autour d'un axe (14a,14b) transversal au sens de l'insertion.

11. Dispositif selon la revendication 10, caractérisé en ce que les éléments (12a,12b) sont sous l'effet d'un ressort de torsion (13a,13b).

Fig.1

Fig. 2

Fig. 3

Fig. 4

Fig. 5

Fig. 6

Fig. 7

Fig.8

7

8

14

D↓        ↓D

6

12b

8

6

Fig.9

7        12b

Fig. 10

Fig. 11